# EUROPEAN PATENT APPLICATION

(11) **EP 2 062 939 A1**
(43) Date of publication of application: **27.05.2009**
(21) Application number: 08168434.2
(22) Date of filing: 06.11.2008
(51) Int. Cl.: C08L 95/00, C08L 53/02, C08F 297/04, C09D 195/00

(54) **Method for preparing complex styrenic block copolymer and asphalt composition containing it**

(30) Priority: 21.11.2007 KR 20070119421
(71) Applicant: Korea Kumho Petrochemical Co., Ltd., Jongno-gu Seoul 110-713 (KR)
(72) Inventor: Kim, Sam Min 106-608 Daelim Dure Apt., 305-720 Daejeon (KR); Na, Dong Hyuk 107-407 Daelim Dure Apt., 305-720 Daejeon (KR); Lee, Dae Hyung 102-1230 Daelim Dure Apt., 305-720 Daejeon (KR); Pyun, Joon Bum 704-1804 Banseok maeul 7 Danji Apt., 305-750 Daejeon (KR)
(74) Representative: Weber, Roland

(57) **Abstract**

Disclosed is a modified asphalt composition obtained by blending asphalt with a complex block copolymer, which is prepared by polymerizing styrene in the presence of an anionic polymerization initiator to prepare a polystyrene solution, adding butadiene to the polystyrene solution, and then further polymerizing styrene, and wherein a triblock copolymer and diblock copolymer are present at a specific proportion. The modified asphalt composition of the present invention exhibits superior ductility at low temperature, while exhibiting comparable or better softening point as compared to conventional compositions, and, thus, is applicable to road paving, waterproof sheets and sealants.

## Description

### CROSS-REFERENCE TO RELATED APPLICATION

This application claims, under 35 U.S.C. §119(a), the benefit of Korean Patent Application No. 10-2007-0119421 filed on November 21, 2007, the entire disclosure of which is hereby incorporated by reference.

### BACKGROUND

### (a) Technical Field

The present invention relates to a modified asphalt composition obtained by blending asphalt with a complex block copolymer, which is prepared by polymerizing styrene in the presence of an anionic polymerization initiator to prepare a polystyrene solution, adding butadiene to the polystyrene solution, and then further polymerizing styrene, and wherein a triblock copolymer and diblock copolymer are present at a specific proportion. The modified asphalt composition of the present invention exhibits superior ductility at low temperature, while exhibiting comparable or better softening point as compared to conventional compositions, and, thus, is applicable to road paving, waterproof sheets and sealants.

### (b) Background Art

In general, unmodified asphalt is very sensitive to temperature during road paving or manufacturing of waterproof sheets. That is, at high temperature, plastic deformation may occur easily due to temperature or load. And, at low temperature, cracking may occur due to accumulated load and repeated expansion and contraction caused by abrupt temperature change. Further, even after road paving, resistance to plastic deformation, temperature sensitivity, fatigue crack, cold crack, etc. may be deteriorated significantly as time goes by, depending on traffic volume.

Recently, asphalt modified by adding polymers is used to solve this problem.

For instance, researches on such polymers as low density polyethylene, ethylene vinyl acetate, styrene-butadiene rubber, butyl rubber, etc. for improving resistance to plastic deformation at high temperature caused by softening and preventing cracks at low temperature caused by external stress and repeated expansion and contraction are carried out, and practically applied on roads.

U.S. Patent No. 3,985,694 (1976. 10. 12., Richard J. Petrucco, et al.) and U.S. Patent No. 4,130,516 (1978. 12. 19.. Duane W. Gagie, et al.) disclose an asphalt/polymer composition with improved properties comprising asphalt and a thermoplastic elastomer such as linear polyethylene, ethylene vinyl acetate or styrene-butadiene rubber.

U.S. Patent No. 3,345,316 discloses an asphalt composition prepared by adding 10 to 30 parts by weight of a thermoplastic elastomer such as a linear styrene-butadiene-styrene triblock copolymer or a styrene-ethylene-butylene-styrene block copolymer obtained by anionic polymerization to a chlorinated polyphenylene resin, without the necessity for a vulcanizing treatment or vulcanizing agent. It mentions that the resultant composition is economically advantageous and provides improved compatibility between asphalt and polymers.

U.S. Statutory Invention Registration No. H1580 discloses an asphalt composition comprising a radial styrene-butadiene-styrene block copolymer with improved processability, softening point and processing stability and sustained viscosity. It is mentioned that the asphalt composition is useful for roofing, coating, hot melt asphalt concrete, sealant, and the like.

U.S. Patent No. 4,130,516 discloses an asphalt composition comprising asphalt, sulfur and a polymer. The polymer is included in an amount of 1 weight % and may be either natural rubber or synthetic rubber. But, whereas the addition of a radial styrene-butadiene random copolymer does not provide improved ductility, a linear styrene-butadiene random copolymer results in improved ductility.

U.S. Patent No. 5,130,354 discloses an asphalt composition containing a polymer modifier having a polar group with improved ductility and adhesion to polar materials. It is mentioned that a butadiene rubber or a styrene-butadiene-styrene triblock copolymer wherein the conjugated diene portion of the polymer is grafted using a silane compound or maleic anhydride may be used.

In U.S. Patent No. 4,443,570, wherein a styrene-ethylene-butylene-styrene block copolymer, which is a hydrogenated saturated polymer, is used as asphalt modifier, an asphalt composition comprising asphalt, an organic solvent, amorphous silica and the styrene-ethylene-butylene-styrene block copolymer is disclosed, which has desirable softening point of about 140 °F and has improved pliability property at low temperatures.

U.S. Patent No. 4,412,019 discloses an asphalt composition comprising asphalt, sulfur and a styrene-ethylene-butylene-styrene block copolymer, wherein the addition amount of the styrene-ethylene-butylene-styrene block copolymer, which is a polymer modifier, is increased to improve ductility and tensile strength at low temperature.

Korean Patent Publication No. 2002-0013709 presents an example of using a mixture composition of a linear styrene-butadiene-styrene triblock copolymer and a radial styrene-butadiene-styrene triblock copolymer as asphalt modifier. It mentions that, by adding a linear styrene-butadiene-styrene triblock copolymer and a radial styrene-butadiene-styrene triblock copolymer at a proportion of 40 to 100 and 60 to 0, respectively, based on weight to asphalt, a modified asphalt composition with superior solubility, storage stability at high temperature, ductility and tenacity, and well-balanced adhesion and softening properties can be obtained.

The polymer-modified asphalt used for road paving described above is known to be very effective in improving such physical properties as high temperature performance, low temperature performance, aging resistance, resistance to plastic deformation, and the like, as compared to pure asphalt binder. The increased viscosity and consequent improved flow resistance at high temperature provides, improved impact and crack resistance at low temperature, and improved aging resistance against light and contact with air are attained because the added polymer components form a polymer and strengthen the asphalt matrix.

In the evaluation of crack resistance at low temperature, ductility plays a critical role. High ductility results in increased flexibility of modified asphalt particularly at low temperature, thereby significantly reducing fatigue caused by loads or crack due to thermal expansion and contraction. Accordingly, ductility can be considered as an important factor in evaluating crack resistance caused by loads particularly in cold regions.

In such materials as waterproof sheets, polymers are often used to prevent damage and cracks caused by expansion and contraction when handling at low temperature area. In low temperature area, the evaluation of low temperature performance is important with regard to preventing damages [KSF 4917, 6.7 Pliability].

In general, polymer modified asphalt has improved flexibility and reduced temperature sensitivity at low temperature, and improved flow resistance and restricted deformation at high temperature. In addition, it has improved tensile strength, stiffness, tenacity, adhesion to aggregate and, thus, prevents the breakage of paving caused by the flow of aggregate.

Different polymers give different effects on the improvement of stability at low temperature. Even similar polymers may result in different improving effect on the resistance to the temperature sensitivity, depending on the polymer structure.

Conventionally, a polyolefin, a styrene-butadiene random copolymer rubber or a styrene-butadiene block copolymer rubber have been mainly added to asphalt as polymer modifier. Especially, a styrene-butadiene random copolymer rubber or a styrene-butadiene block copolymer rubber is known to increase ductility and thereby retard the crack and breakage of asphalt at low temperature due to repeated expansion and contraction. Also, asphalt compositions using wasted tire crumb crushed at extremely low temperature as modifier are utilized. In spite of economical advantage, they are known to have worse high temperature and low temperature performance than styrene-butadiene block copolymer rubbers, on the whole.

In addition, an ethylene-propylene diene rubber is used. But, it is used only limitedly because of high melt temperature and is costly. Further, amine compounds or sulfur compounds are used to prevent phase separation between asphalt and the polymer modifier at high temperature, and polymers substituted with polar groups are used, too.

As described, the improvement of the properties of an asphalt composition by the addition of a polymer is largely affected by the properties of the added polymer. Hence, there is a consistent need for the development of polymers as modifier of asphalt in order to provide better properties, including ductility.

### SUMMARY OF THE DISCLOSURE

The present invention has been made in an effort to solve the above-described problems associated with the prior art.

The present invention provides a complex styrenic block copolymer comprising a polystyrene-polybutadiene-polystyrene triblock copolymer and a polybutadiene-polystyrene diblock copolymer prepared by a novel method different from the conventional method, and a modified asphalt composition with very superior ductility at low temperature, which is modified by the complex block copolymer.

When compared with product prepared by the conventional coupling method, the complex block copolymer prepared by adding a polymerization initiator before and after styrene polymerization according to the present invention comprises a polystyrene-polybutadiene diblock copolymer having longer butadiene blocks. When this complex block copolymer is used as asphalt modifier, ductility of the modified asphalt is improved outstandingly, thereby resulting in superior low temperature stability.

In a preferred embodiment, the present invention provides a modified asphalt composition comprising 100 parts by weight of asphalt and 0.5 to 40 parts by weight of a complex block copolymer comprising 70 to 99 weight % of a triblock copolymer represented by the formula (1) below and 1 to 30 weight % of a diblock copolymer represented by the formula (2) below:

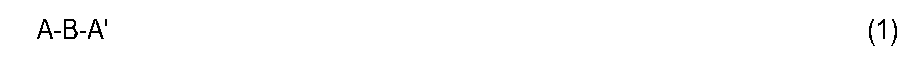

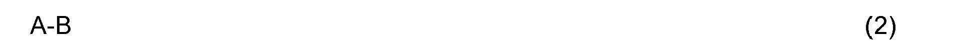

wherein A and A', which may be the same or different, are respectively a polymer block comprising a styrene monomer, and B is a polymer block comprising a butadiene monomer or a polymer block comprising a butadiene monomer in which a styrene monomer is tapered in the polymer block.

In another preferred embodiment, the present invention provides a method for preparing a complex block copolymer comprising the steps of: polymerizing styrene in a saturated hydrocarbon solvent, in the presence of an anionic polymerization initiator and preparing a polystyrene solution having activated ends; adding an anionic polymerization initiator and a butadiene monomer to the polystyrene solution to prepare a polystyrene-polybutadiene polymer solution and a polydiene polymer solution having activated ends; and adding styrene to the polystyrene-polybutadiene polymer solution and the polydiene polymer solution having activated ends to prepare a complex block copolymer comprising a triblock copolymer represented by the formula (1) and a diblock copolymer represented by the formula (2).

The styrene-butadiene-styrene block copolymer comprising a styrene-butadiene diblock copolymer having long butadiene blocks and a modified asphalt composition comprising the same provide superior ductility at low temperature, while exhibiting comparable or better softening point when compared to conventional ones, and is applicable to road paving, waterproof sheets and sealants.

### DETAILED DESCRIPTION

Reference will now be made in detail to the preferred embodiments of the present invention.

The present invention relates to a method for preparing a complex block copolymer by polymerizing styrene in the presence of an anionic polymerization initiator to prepare a polystyrene solution, adding butadiene to the polystyrene solution, and then further polymerizing styrene, and wherein a triblock copolymer and diblock copolymer are present at a specific proportion, and a modified asphalt composition modified using the same.

Specifically, a styrene monomer is polymerized in a saturated hydrocarbon solvent using an anionic polymerization initiator, and then, after further adding a small amount of a polymerization initiator, butadiene is added and polymerization is performed. To such prepared mixture of a polystyrene-polybutadiene diblock copolymer having activated ends and a polybutadiene solution having activated ends, a styrene monomer is added and polymerization is performed. Then, a complex block copolymer is obtained, which comprises a triblock copolymer amounting to the proportion of the styrene monomer originally added, and a diblock copolymer amounting to the proportion corresponding to the further added amount of anionic polymerization initiator.

That is to say, the present invention provides not a modified asphalt composition comprising pure asphalt and a complex block copolymer comprising a diblock copolymer having short butadiene monomers, but a modified asphalt composition comprising a complex block copolymer comprising a diblock copolymer having long butadiene monomers as modifier.

Although the complex block copolymer of the present invention is prepared by the common anionic polymerization method employed in the related art, the sequence of polymerization is totally different.

In general, a styrene monomer is polymerized using an anionic polymerization initiator, and then a butadiene monomer is added to prepare a polystyrene-polybutadiene diblock copolymer. Subsequently, a complex block copolymer comprising a polystyrene-polybutadiene-polystyrene triblock copolymer and a polybutadiene-polystyrene diblock copolymer is prepared, by adequately controlling using a coupling agent. Alternatively, in order to prepare a complex block copolymer comprising a triblock copolymer and a diblock copolymer, a small amount of polymerization initiator or a small amount of polymerization terminator is added while butadiene is being polymerized.

On the contrary, in the present invention, a small amount of polymerization initiator is added just after styrene polymerization, instead of adding a small amount of polymerization initiator while butadiene is being polymerized. As a result, a complex block copolymer comprising a polystyrene-polybutadiene-polystyrene triblock copolymer and a polybutadiene-polystyrene diblock copolymer having long butadiene blocks is prepared. When the resultant complex block copolymer is used as asphalt modifier, the modified asphalt exhibits superior ductility at low temperature.

Hereinafter, the modified asphalt composition according to the present invention is described in further detail.

In accordance with the present invention, a complex block copolymer comprising 70 to 99 weight % of a triblock copolymer represented by the formula (1) below and 1 to 30 weight % of a diblock copolymer represented by the formula (2) below is used as asphalt modifier:

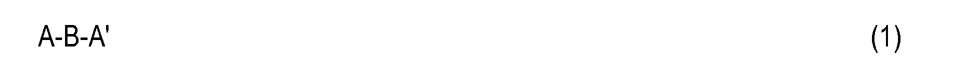

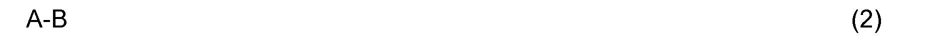

wherein A and A', which may be the same or different, are respectively a polymer block comprising a styrene monomer, wherein the styrene monomer may be at least one selected from styrene, α-methylstyrene, *o*-methylstyrene, *p*-methylstyrene and *p*-*tert*-butylstyrene, preferably styrene; and

B is a polymer block comprising a butadiene monomer or a polymer block comprising a butadiene monomer in which a styrene monomer is tapered in the polymer block.

That is, a styrene-butadiene-styrene triblock copolymer represented by the formula (1) and a styrene-butadiene diblock copolymer represented by the formula (2) are preferred.

When the content of the triblock copolymer represented by the formula (1) is less than 70 weight %, mechanical properties including tensile strength are deteriorated as the amount of the triblock copolymer which provides mechanical properties of thermoplastic elastomer is decreased. And, when the content of the triblock copolymer exceeds 99 weight %, ductility becomes deteriorated as the amount of the diblock copolymer which provides processability and ductility at low temperature is decreased. Hence, the aforesaid range is preferred.

The styrene monomer is contained in the amount of from 15 to 40 weight %, based on the total weight of the complex block copolymer. When the content is below 15 weight %, mechanical properties may be deteriorated. And, when the content exceeds 40 weight %, ductility may be deteriorated. Hence, the aforesaid range is preferred.

And, of the total styrene monomer included in the complex block copolymer, 80 to 99 weight % of the styrene monomer is formed into blocks. The block ratio refers to the percentage of the styrene monomer present as blocks in the total styrene monomer. A block ratio lower than 80 weight %, result in problem in the formation of styrene domain in the triblock, thereby resulting in deteriorated mechanical properties including tensile strength. A block ratio higher than 99 weight %, for example 100 weight %, is more preferred, but is economically undesirable since the reaction time is extended. Hence, the aforesaid range is preferred.

In the styrene monomer contained in the complex block copolymer, the difference of number average molecular weight between A and A' is maintained from 0 to 10,000. In general, the triblock copolymer provides mechanical properties, and particularly, the styrene monomer included in the copolymer plays the most important role. The best effect is attained when the styrene monomers included in the triblock copolymer have the same size. When the difference in the number average molecular weight exceeds 10,000, for example, if one styrene monomer block has a number average molecular weight of about 25,000 and the other styrene monomer block has a number average molecular weight of about 5,000, the feature of the triblock copolymer is not exhibited at all, thereby deteriorating mechanical properties, such as thermoplastic elasticity, tensile strength.

The complex block copolymer of the present invention has a number average molecular weight in the range from 50,000 to 300,000, preferably from 70,000 to 150,000. If a molecular weight is smaller than 50,000 it may result in deterioration of mechanical properties. In contrast, if a molecular weight is larger than 300,000 it may result in deterioration of processability. Hence, the aforesaid range is preferred.

The complex block copolymer is prepared by the method commonly used in the related art. Specifically, anionic polymerization is performed in the presence of an anionic initiator such as an organolithium compound.

Reaction condition, reaction solvent, etc. of the anionic polymerization may be those normally employed in the related art, and are not particularly limited. However, the present invention is **characterized in that** a coupling agent and a butadiene monomer are added together, differently from the conventional method. The reaction is performed in the absence of air and moisture, at a reaction temperature of at least 40 °C. Preferably, tetrahydrofuran is used as reaction solvent and the concentration is controlled below 500 ppm.

The present invention also provides a modified asphalt composition comprising 100 parts by weight of asphalt and 0.05 to 40 parts by weight, preferably 1 to 20 parts by weight, of the aforesaid complex block copolymer. When the complex block copolymer is contained in less than 0.05 part by weight, polymer may not function as modifier of asphalt. And, when the content exceeds 40 parts by weight, the resultant modified asphalt may have poor dispersing and flow properties due to too high viscosity, and the retarded dispersing may result in thermal decomposition of the asphalt binder and mechanical decomposition thereof due to shear stress.

The modified asphalt composition comprising asphalt and the complex block copolymer according to the present invention may further comprise a linear or block copolymer. The linear or block copolymer may be one commonly used in the related art and is not particularly limited. For example, a styrene-butadiene-styrene copolymer, etc. may be used. The content of the linear or block copolymer is not particularly limited.

Sulfur may be added during the preparation of the modified asphalt composition, in order to control phase separation. Per 100 parts by weight of the complex block copolymer, sulfur may be used in 0 to 20 parts by weight, preferably in 0 to 10 parts by weight. A sulfur content exceeding 20 parts by weight may result in gelation and phase separation. Hence, the aforesaid range is preferred.

Thus prepared modified asphalt composition exhibits significantly improved ductility at low temperature, while maintaining comparable or better properties, including softening point and molecular weight, when compared to conventional compositions. Accordingly, it provides improved stability at low temperature.

### EXAMPLES

The following examples illustrate the present invention but they should not be construed as limiting the scope of the present invention.

Preparation Examples: Preparation of complex block copolymer comprising styrene-butadiene diblock copolymer and styrene-butadiene-styrene triblock copolymer

### Preparation Example 1

The inside atmosphere of a 2-L autoclave was sufficiently substituted with argon gas. 900 g of purified cyclohexane and 30 g of styrene were charged in the autoclave and the temperature was maintained at 60 °C. A cyclohexane solution (1.3 M) of 1.7 mmol of *n*-butyllithium (BuLi) was added to the autoclave as polymerization initiator. 5 minutes after the polymerization temperature reached highest, 0.3 mmol of *n*-butyllithium (BuLi) and 138 g of butadiene were added. Then, 3 minutes after the butadiene polymerization temperature reached highest, 32 g of styrene was added to the autoclave. Polymerization was terminated by adding a small amount of methanol to the polymerization solution to completely inhibit the activity of the living polymer and then adding 1 g of Irganox 1076 (Aldrich) and 1.5 g of trisnonylphenol (TNPP) as an antioxidant.

From the resultant polymer solution, the solvent was removed using steam and a styrene-butadiene block copolymer with asymmetric styrene blocks was obtained in the form of crumb. The remaining solvent and water were removed by roll milling. The content of the styrene-butadiene-styrene triblock copolymer was 85 weight % and the content of the styrene-butadiene diblock copolymer was 15 weight %.

### Preparation Example 2

The inside atmosphere of a 2-L autoclave was sufficiently substituted with argon gas. 900 g of purified cyclohexane and 30 g of styrene were charged in the autoclave and the temperature was maintained at 60 °C. A cyclohexane solution (1.3 M) of 2.0 mmol of *n*-butyllithium (BuLi) was added to the autoclave as polymerization initiator. 5 minutes after the polymerization temperature reached highest, 0.3 mmol of *n*-butyllithium (BuLi) and 138 g of butadiene were added. Then, 3 minutes after the butadiene polymerization temperature reached highest, 32 g of styrene was added to the autoclave. Polymerization was terminated by adding a small amount of methanol to the polymerization solution to completely inhibit the activity of the living polymer and then adding 1 g of Irganox 1076 (Aldrich) and 1.5 g of trisnonylphenol (TNPP) as an antioxidant.

From the resultant polymer solution, the solvent was removed using steam and a styrene-butadiene block copolymer with asymmetric styrene blocks was obtained in the form of crumb. The remaining solvent and water were removed by roll milling. The content of the styrene-butadiene-styrene triblock copolymer was 87 weight % and the content of the styrene-butadiene diblock copolymer was 13 weight %.

### Preparation Example 3

The inside atmosphere of a 2-L autoclave was sufficiently substituted with argon gas. 900 g of purified cyclohexane and 30 g of styrene were charged in the autoclave and the temperature was maintained at 60 °C. A cyclohexane solution (1.3 M) of 2.5 mmol of *n*-butyllithium (BuLi) was added to the autoclave as polymerization initiator. 5 minutes after the polymerization temperature reached highest, 0.3 mmol of *n*-butyllithium (BuLi) and 138 g of butadiene were added. Then, 3 minutes after the butadiene polymerization temperature reached highest, 32 g of styrene was added to the autoclave. Polymerization was terminated by adding a small amount of methanol to the polymerization solution to completely inhibit the activity of the living polymer and then adding 1 g of Irganox 1076 (Aldrich) and 1.5 g of trisnonylphenol (TNPP) as an antioxidant.

From the resultant polymer solution, the solvent was removed using steam and a styrene-butadiene block copolymer with asymmetric styrene blocks was obtained in the form of crumb. The remaining solvent and water were removed by roll milling. The content of the styrene-butadiene-styrene triblock copolymer was 89 weight % and the content of the styrene-butadiene diblock copolymer was 11 weight %.

### Preparation Example 4

The inside atmosphere of a 2-L autoclave was sufficiently substituted with argon gas. 900 g of purified cyclohexane and 30 g of styrene were charged in the autoclave and the temperature was maintained at 60 °C. A cyclohexane solution (1.3 M) of 3.0 mmol of *n*-butyllithium (BuLi) was added to the autoclave as polymerization initiator. 5 minutes after the polymerization temperature reached highest, 0.4 mmol of *n*-butyllithium (BuLi) and 138 g of butadiene were added. Then, 3 minutes after the butadiene polymerization temperature reached highest, 32 g of styrene was added to the autoclave. Polymerization was terminated by adding a small amount of methanol to the polymerization solution to completely inhibit the activity of the living polymer and then adding 1 g of Irganox 1076 (Aldrich) and 1.5 g of trisnonylphenol (TNPP) as an antioxidant.

From the resultant polymer solution, the solvent was removed using steam and a styrene-butadiene block copolymer with asymmetric styrene blocks was obtained in the form of crumb. The remaining solvent and water were removed by roll milling. The content of the styrene-butadiene-styrene triblock copolymer was 88 weight % and the content of the styrene-butadiene diblock copolymer was 12 weight %.

### Preparation Example 5

The inside atmosphere of a 2-L autoclave was sufficiently substituted with argon gas. 900 g of purified cyclohexane and 23 g of styrene were charged in the autoclave and the temperature was maintained at 60 °C. A cyclohexane solution (1.3 M) of 2.0 mmol of *n*-butyllithium (BuLi) was added to the autoclave as polymerization initiator. 5 minutes after the polymerization temperature reached highest, 0.3 mmol of *n*-butyllithium (BuLi) and 150 g of butadiene were added. Then, 3 minutes after the butadiene polymerization temperature reached highest, 27 g of styrene was added to the autoclave. Polymerization was terminated by adding a small amount of methanol to the polymerization solution to completely inhibit the activity of the living polymer and then adding 1 g of Irganox 1076 (Aldrich) and 1.5 g of trisnonylphenol (TNPP) as an antioxidant.

From the resultant polymer solution, the solvent was removed using steam and a styrene-butadiene block copolymer with asymmetric styrene blocks was obtained in the form of crumb. The remaining solvent and water were removed by roll milling. The content of the styrene-butadiene-styrene triblock copolymer was 87 weight % and the content of the styrene-butadiene diblock copolymer was 13 weight %.

### Preparation Example 6

The inside atmosphere of a 2-L autoclave was sufficiently substituted with argon gas. 900 g of purified cyclohexane and 19 g of styrene were charged in the autoclave and the temperature was maintained at 60 °C. A cyclohexane solution (1.3 M) of 2.0 mmol of *n*-butyllithium (BuLi) was added to the autoclave as polymerization initiator. 5 minutes after the polymerization temperature reached highest, 0.3 mmol of *n*-butyllithium (BuLi) and 160 g of butadiene were added. Then, 3 minutes after the butadiene polymerization temperature reached highest, 21 g of styrene was added to the autoclave. Polymerization was terminated by adding a small amount of methanol to the polymerization solution to completely inhibit the activity of the living polymer and then adding 1 g of Irganox 1076 (Aldrich) and 1.5 g of trisnonylphenol (TNPP) as an antioxidant.

From the resultant polymer solution, the solvent was removed using steam and a styrene-butadiene block copolymer with asymmetric styrene blocks was obtained in the form of crumb. The remaining solvent and water were removed by roll milling. The content of the styrene-butadiene-styrene triblock copolymer was 87 weight % and the content of the styrene-butadiene diblock copolymer was 13 weight %.

Comparative Preparation Example 1: Preparation of linear styrene-butadiene block copolymer

The inside atmosphere of a 2-L autoclave was sufficiently substituted with argon gas. 900 g of purified cyclohexane and 30 g of styrene were charged in the autoclave and the temperature was maintained at 60 °C. A cyclohexane solution (1.3 M) of 2.5 mmol of *n*-butyllithium (BuLi) was added to the autoclave as polymerization initiator. 5 minutes after the polymerization temperature reached highest, 69 g of butadiene was added. Then, 3 minutes after the butadiene polymerization temperature reached highest, 0.3 mmol of *n*-butyllithium (BuLi) and 69 g of butadiene were added. 3 minutes after the butadiene polymerization temperature reached highest, 32 g of styrene was added to the autoclave. Polymerization was terminated by adding a small amount of methanol to the polymerization solution to completely inhibit the activity of the living polymer and then adding 1 g of Irganox 1076 (Aldrich) and 1.5 g of trisnonylphenol (TNPP) as an antioxidant.

From the resultant polymer solution, the solvent was removed using steam and a styrene-butadiene block copolymer was obtained in the form of crumb. The remaining solvent and water were removed by roll milling.

Comparative Preparation Example 2: Preparation of linear styrene-butadiene block copolymer

The inside atmosphere of a 2-L autoclave was sufficiently substituted with argon gas. 900 g of purified cyclohexane and 62 g of styrene were charged in the autoclave and the temperature was maintained at 60 °C. A cyclohexane solution (1.3 M) of 4.0 mmol of *n*-butyllithium (BuLi) was added to the autoclave as polymerization initiator. 5 minutes after the polymerization temperature reached highest, 138 g of butadiene was added. Then, 3 minutes after the butadiene polymerization temperature reached highest, 2.0 mmol of dichlorosilane was added as coupling agent. A styrene-butadiene-styrene copolymer blend was obtained with a coupling efficiency of 86 %. Then, 1 g of Irganox 1076 (Aldrich) and 1.5 g of trisnonylphenol (TNPP) were added as an antioxidant and the same procedure as in Comparative Preparation Example 1 was carried out.

From the resultant polymer solution, the solvent was removed using steam and a styrene-butadiene block copolymer was obtained in the form of crumb. The remaining solvent and water were removed by roll milling.

Comparative Preparation Example 2: Preparation of radial styrene-butadiene block copolymer

The inside atmosphere of a 2-L autoclave was sufficiently substituted with argon gas. 900 g of purified cyclohexane and 62 g of styrene were charged in the autoclave and the temperature was maintained at 60 °C. A cyclohexane solution (1.3 M) of 4.2 mmol of *n*-butyllithium (BuLi) was added to the autoclave as polymerization initiator. 5 minutes after the polymerization temperature reached highest, 138 g of butadiene was added. Then, 3 minutes after the butadiene polymerization temperature reached highest, 1.0 mmol of tetrachlorosilane was added as coupling agent. A styrene-butadiene-styrene copolymer blend was obtained with a coupling efficiency of 90 %. Then, 1 g of Irganox 1076 (Aldrich) and 1.5 g of trisnonylphenol (TNPP) were added as an antioxidant and the same procedure as in Comparative Preparation Example 1 was carried out.

From the resultant polymer solution, the solvent was removed using steam and a styrene-butadiene block copolymer was obtained in the form of crumb. The remaining solvent and water were removed by roll milling.

Physical properties of the block copolymers prepared in Preparation Examples 1 to 6 and Comparative Preparation Examples 1 to 3 were measured as follows and are summarized in Table 1.

### Physical property measurement

### 1. Molecular weight

Molecular weight analysis was performed using an HPLC separation's module Waters 2690 and a differential refractometer Waters 410 as detector, under the following conditions: column temperature = 41 °C; solvent = THF; flow rate = 1.0 mL/min. The column was prepared by connecting divinylbenzene Styragel HR 5E, HR 4 and HR 2 in series. Detection was performed using standard polystyrene sample. Difference of refractive index was measured.

### 2. Fine structure and contents

Analysis of contents of styrene and butadiene and fine structure was performed using nuclear magnetic resonance analyzers Varian NMR-200 and NMR-400. Chloroform-d was used as solvent for sample analysis.

**Table 1**

| | Styrene content (%) | Block ratio (%) | Average molecular weight (Mₙ) | Coupling efficiency (%) |
|---|---|---|---|---|
| Preparation Example 1 | 29.8 | 99 | 125,000 | - |
| Preparation Example 2 | 29.5 | 93 | 101.000 | - |
| Preparation Example 3 | 30.2 | 98 | 94,000 | - |
| Preparation Example 4 | 29.8 | 98 | 85,000 | - |
| Preparation Example 5 | 25.3 | 97 | 107,000 | - |
| Preparation Example 6 | 20.8 | 95 | 104,000 | - |
| Comparative Preparation Example 1 | 30.5 | 91 | 98,000 | - |
| Comparative Preparation Example 2 | 29.8 | 97 | 105,000 | 86 |
| Comparative Preparation Example 3 | 30.1 | 96 | 199,000 | 90 |

### Examples: Preparation of modified asphalt

### Examples 1 to 6 and Comparative Examples 1 to 3

To 600 g of pure asphalt melt at 180 °C, each of the block copolymers prepared in Preparation Examples 1 to 6 and Comparative Preparation Examples 1 to 3 was added in an amount of 4.5 parts by weight per 100 parts by weight of the asphalt. A modified asphalt composition was prepared by mixing with a high speed shear mixer for 30 minutes.

Physical properties of the resultant modified asphalt compositions were measured and are summarized in Table 2. As for modified asphalt compositions used in road paving, ductility at low temperature is very important. Each of the block copolymer-modified asphalt compositions was poured in a mold for making low temperature ductility test sample and cooled down to prepare a ductility test sample [KS M 2254]. Maintaining temperature at 4 °C using a water bath, the ductility test sample was pulled from both sides at a speed of 3 cm/min. The tensile length when the sample was broken was measured according to KS M 2254. The measurement result is presented in Table 2, along with softening point.

**Table 2**

| | Content of block copolymer (parts by weight)¹⁾ | Softening point (°C) | Ductility (4 °C, cm) |
|---|---|---|---|
| Example 1 | 4.5 | 85 | 22.1 |
| Example 2 | 4.5 | 84 | 21.7 |
| Example 3 | 4.5 | 84 | 19.7 |
| Example 4 | 4.5 | 77 | 15.7 |
| Example 5 | 4.5 | 66 | 18.8 |
| Example 6 | 4.5 | 62 | 23.1 |
| Comparative Example 1 | 4.5 | 85 | 15.5 |
| Comparative Example 2 | 4.5 | 84 | 14.4 |
| Comparative Example 3 | 4.5 | 97 | 12.4 |
| 1) Parts by weight per 100 parts by weight of asphalt | | | |

As can be seen in Table 2, softening point was superior when the molecular weight was larger, on the whole.

And, the asphalt compositions modified by adding the block copolymer comprising a styrene-butadiene diblock copolymer having long butadiene blocks and a styrene-butadiene-styrene block copolymer according to the present invention to asphalt (Examples 1 to 6) exhibited significantly improved ductility when compared to those of Comparative Examples 1 to 3, even though the softening point was similar.

Specifically, when comparing Example 2, in which styrene content and molecular weight are similar but the styrene-butadiene diblock copolymer has longer butadiene chains, with Comparative Example 1 and Comparative Example 2, Example 2 exhibits significantly improved ductility, even though the softening point is similar.

And, comparing Comparative Examples 1 and 2, in which linear block copolymers were used, with Comparative Example 3, in which a radial block copolymer was used, it can be seen that Comparative Example 3 exhibits superior softening point but reduced ductility than Comparative Examples 1 and 2.

To conclude, when the styrene-butadiene-styrene block copolymer comprising a styrene-butadiene diblock copolymer having long butadiene blocks according to the present invention is used as asphalt modifier, ductility at low temperature is greatly increased, thereby improving flexibility of the modified asphalt and reducing fatigue caused by loads or crack due to thermal expansion and contraction. Therefore, the associated asphalt modifier is suitable for road paving. And, when compared with the linear block copolymer, the radial block copolymer offers superior softening point, but very poor ductility.

The invention has been described in detail with reference to the preferred embodiments thereof. However, it will be appreciated by those skilled in the art that changes may be made in these embodiments without departing from the principles and spirit of the invention, the scope of which is defined in the appended claims and their equivalents.

## Claims

1. A modified asphalt composition comprising: 100 parts by weight of asphalt; and 0.5 to 40 parts by weight of a complex block copolymer comprising 70 to 99 weight % of a triblock copolymer represented by the formula (1) below and 1 to 30 weight % of a diblock copolymer represented by the formula (2) below: 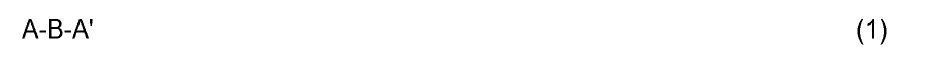 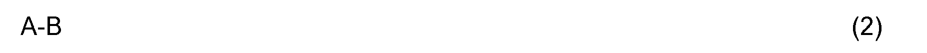
wherein A and A', which may be the same or different, are respectively a polymer block comprising a styrene monomer, and B is a polymer block comprising a butadiene monomer or a polymer block comprising a butadiene monomer in which a styrene monomer is tapered in the polymer block.

2. The modified asphalt composition of claim 1, wherein the complex block copolymer is contained in the amount of from 1 to 20 parts by weight per 100 parts by weight of asphalt.

3. The modified asphalt composition of claim 1, wherein the styrene monomer is contained in the complex block copolymer in an amount from 15 to 40 weight %.

4. The modified asphalt composition of claim 1, wherein the complex block copolymer has a number average molecular weight ranging from 50,000 to 300,000.

5. The modified asphalt composition of claim 1, wherein, of the total styrene monomer contained in the complex block copolymer, 80 to 99 weight % of the styrene monomer is formed into blocks.

6. The modified asphalt composition of claim 1, wherein, in the styrene monomer contained in the complex block copolymer, the difference of number average molecular weight between A and A' is from 0 to 10,000.

7. The modified asphalt composition of claim 1, wherein the modified asphalt composition is used for road paving, waterproof sheets and/or sealants.

8. A method for preparing a complex block copolymer comprising the steps of:
polymerizing styrene in a saturated hydrocarbon solvent, in the presence of an anionic polymerization initiator and preparing a polystyrene solution having activated ends;
adding an anionic polymerization initiator and a butadiene monomer to the polystyrene solution to prepare a polystyrene-polybutadiene polymer solution and a polydiene polymer solution having activated ends; and
adding styrene to the polystyrene-polybutadiene polymer solution and the polydiene polymer solution having activated ends to prepare a complex block copolymer comprising a triblock copolymer represented by the formula (1) below and a diblock copolymer represented by the formula (2) below: 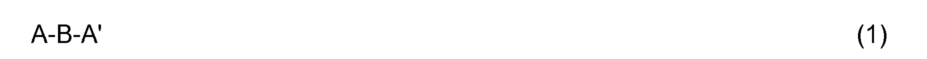 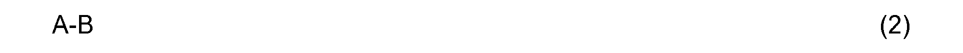
wherein A and A', which may be the same or different, are respectively a polymer block comprising a styrene monomer, and B is a polymer block comprising a butadiene monomer or a polymer block comprising a butadiene monomer in which a styrene monomer is tapered in the polymer block.
